# EUROPEAN PATENT APPLICATION

(11) **EP 4 521 301 A1**
(43) Date of publication of application: **12.03.2025**
(21) Application number: 23196099.8
(22) Date of filing: 07.09.2023
(51) Int. Cl.: G06N 3/092, G06N 20/00, G06N 3/006, H04L 9/40, G06F 21/55

(54) **REINFORCEMENT LEARNING COMPUTER SYSTEM TRAINING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

The present disclosure relates to reinforcement learning (RL) agents, for example for cybersecurity and network management applications. Proposed herein is a computer system for training a reinforcement learning (RL) agent to perform a task by iteratively: ingesting an observation of a simulated environment, and enacting an action on the simulated environment to form a series of actions, the series of actions comprising at least one multivariate action defined by v variables, the computer system comprising: a decomposition engine configured to, for each multivariate action, extract one or more sub-actions, each sub-action being defined by a number of the v variables; a reward engine configured to assign a sub-reward to the RL agent for each sub-action; and an environment interface configured to enact the series of actions on the simulated environment.

## Description

### FIELD

The present disclosure relates to reinforcement learning (RL) agents, for example for cybersecurity and network management applications.

More specifically, aspects relate to computer systems for training RL agents, computer-implemented methods of improving the security of computer networks, computer-implemented methods of training RL agents, RL agents trained according to such methods, data processing systems configured to perform such methods, computer programs comprising instructions which, when the program is executed by a computer, cause the computer to carry out such methods, computer-readable data carriers having stored such computer programs thereon, and data carrier signals carrying such computer programs.

### BACKGROUND

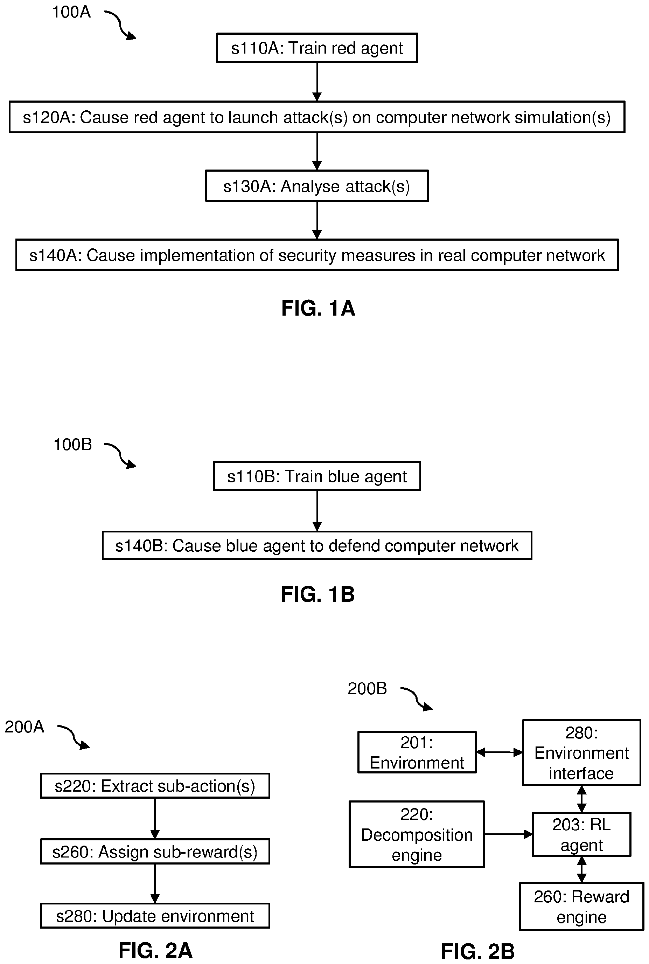

Machine learning 'red' agents can be used as illustrated in the method 100A of improving the security of a computer network shown in Figure 1A. At step s110A the red agent is trained on a computer network simulation, for example a simulation of the real computer network whose security is to be improved, or a similar network. At step s120A the red agent is caused to launch one or more attacks on one or more computer network simulations, for example the same simulation on which it was trained and/or similar simulations, such as simulations updated to take into account changes to the real computer network over time or tweaked to incorporate different and/or additional security measures which could be implemented. At step s130A an analysis of those one or more attacks is performed. Then at step s140A implementation of security measures in the real computer network is caused, based on that analysis.

Machine learning `blue' agents can be used as illustrated in the method 100B of improving the security of a computer network shown in Figure 1B. At step s110B the blue agent is trained on a computer network simulation, for example a simulation of the real computer network whose security is to be improved, or a similar network. At step s140B the blue agent is caused to defend the computer network.

One way of training cybersecurity and other machine learning agents is through reinforcement learning. RL agents learn through a feedback loop of observing the state of an environment and acting upon it. Each action is rewarded in accordance with whether it led the agent towards or away from its goal. The 'observation space' is a description of all of the possible states in which the environment can exist. The 'action space' is a description of all of the possible actions an agent is able to execute in the environment.

Large action spaces can lead to inefficient agent training, and even impractically long agent training times, especially if a large proportion of the action space corresponds to invalid or undesirable actions. This is for example the case when training a cybersecurity agent. The same problem can also arise when training agents for other purposes. For example, agents for training robots to perform physical tasks (e.g., locomotion or manual labour) need to provide, at each step, the movement for each moving part of the robot (e.g., for each limb in the case of bio-inspired robots). As another example, agents for managing logistical tasks such as rail network management can also have large action spaces. Similarly, agents for telecommunications network management generally have very large action spaces due to the large numbers of nodes involved. In general, action spaces tend to be large for agents configured to act on large networks, which can for example be represented as graphs of large numbers of nodes interconnected by edges. Action space reduction techniques are available, however they generally sacrifice specificity in the actions an agent is allowed, for the benefit of a smaller number of invalid or incorrect actions.

In order to make use of RL agents for complex tasks such as cybersecurity infection modelling, telecommunications and other network management, robot control, and logistical task management, a more flexible and efficient approach is needed.

### SUMMARY

Aspects of the present disclosure are set out in the following clauses.
1. A computer system for training a reinforcement learning, `RL', agent to perform a task by iteratively: ingesting an observation of a simulated environment, and enacting an action on the simulated environment to form a series of actions, the series of actions comprising at least one multivariate action defined by v variables, the computer system comprising:
   a decomposition engine configured to, for each multivariate action, extract one or more sub-actions, each sub-action being defined by a number of the v variables;
   a reward engine configured to assign a sub-reward to the RL agent for each sub-action; and
   an environment interface configured to enact the series of actions on the simulated environment.

   1a. The computer system of clause 1, further comprising an observation engine configured to, for each action in the series of actions:
      obtain an observation of the simulated environment; and
      provide input to the RL agent based on that observation.
   1b. The computer system of either of clauses 1 or 1a, wherein the decomposition engine is configured to extract the one or more sub-actions in dependence on v.
   1c. The computer system of any of clauses 1 to 1b, wherein the one or more sub-actions extracted by the decomposition engine form an indexed series, and the decomposition engine is further configured to, for each sub-action, send the agent a corresponding sub-action index together with a request to select a sub-action.
   1d. The computer system of any of clauses 1 to 1c, wherein the reward engine is configured to determine the sub-reward for each sub-action in dependence on sub-rewards assigned to any preceding sub-actions comprised in the same multivariate action.
   1e. The computer system of clause 1d, wherein the decomposition engine is further configured to order the extracted sub-actions in dependence on a probability that each of the sub-actions is invalid.
   1f. The computer system of any of clauses 1 to 1e, wherein each sub-action has an associated sub-action action space, the decomposition engine being further configured to normalise each sub-action action space to the largest sub-action action space for the extracted sub-actions for the multivariate action.
   1g. The computer system of clause 1f, wherein the decomposition engine is configured to normalise each sub-action action space by translating smaller sub-action action spaces to larger sub-action action spaces using bins with sizes determined in dependence on a prediction of sub-reward for each possible sub-action.
   1h. The computer system of either of clauses 1f or 1g, wherein the decomposition engine is configured to normalise each sub-action action space by translating smaller sub-action action spaces to larger sub-action action spaces using bins with sizes which are adjusted as iteration through the series of actions progresses.
2. A computer-implemented method of training a reinforcement learning, `RL', agent to perform a task by enacting a series of actions on a simulated environment, each action being defined by a series of one or more sub-actions, the method comprising a training program, for a current action in the series of actions:
   a. determining a next sub-action type in the series of sub-actions;
   b. sending the RL agent an observation of the simulated environment and a request to select a sub-action of that type;
   c. receiving a response to the request from the RL agent;
   d. assigning the RL agent a sub-reward determined in dependence on that response;
   e. determining whether the current action is fully defined and/or invalid;
   f. iterating steps a. to e. until an outcome of step e. is affirmative; then
   g. updating the environment;
   the method being performed iteratively for each action in the series of actions until a termination criterion is reached.
3. The computer-implemented method of clause 2, wherein step a. is performed in dependence on the response(s) received from the agent in any preceding iterations of step c. for the current action.
4. The computer-implemented method of either of clauses 2 or 3, wherein the sub-actions are indexed in a series for each action, and step b. further comprises sending the agent the next sub-action index in that series.
5. The computer-implemented method of any of clauses 2 to 4, wherein step d. comprises determining the sub-reward in dependence on sub-rewards assigned to any preceding sub-actions comprised in the current action.
6. The computer-implemented method of clause 5, wherein step a. comprises:
   a-i. determining one or more available sub-action types, each with an associated probability that a sub-action of that type is invalid; and
   a-ii. determining the next sub-action type as the one of the available sub-action types with the lowest associated probability that a sub-action of that type is invalid.
7. The computer-implemented method of any of clauses 2 to 6, wherein:
   each sub-action type has an associated sub-action action space, the method further comprising normalising each sub-action action space to the largest sub-action action space for the series of sub-actions.
   7a. The computer-implemented method of clause 7, wherein the normalising comprises translating smaller sub-action action spaces to larger sub-action action spaces using bins with sizes determined in dependence on a prediction of sub-reward for each possible sub-action.
   7b. The computer-implemented method of either of clauses 7 or 7a, wherein the normalising comprises translating smaller sub-action action spaces to larger sub-action action spaces using bins with sizes which are adjusted as iteration through the series of actions progresses.
8. A computer-implemented method of training a reinforcement learning, `RL', agent to perform a task by iteratively: ingesting an observation of a simulated environment, and enacting an action on the simulated environment to form a series of actions, the series of actions comprising at least one multivariate action defined by v variables" the method comprising, for each multivariate action:
   i. extracting one or more sub-actions, each sub-action being defined by a number of the v variables; and
   ii. assigning a sub-reward to each sub-action; then
   iii. updating the environment.

   8a. The computer-implemented method of clause 8, further comprising, for each action in the series of actions:
      obtaining an observation of the simulated environment; and
      providing input to the RL agent based on that observation.
   8b. The computer-implemented method of either of clauses 8 or 8a, wherein step i. is performed such that a number of sub-actions extracted for each multivariate action depends on v.
   8c. The computer-implemented method of any of clauses 8 to 8b, wherein the one or more sub-actions extracted in step i. form an indexed series, and the method further comprises:
      for each sub-action, sending the agent a corresponding sub-action index together with a request to select a sub-action.
   8d. The computer-implemented method of any of clauses 8 to 8c, wherein step ii. comprises determining the sub-reward for each sub-action in dependence on sub-rewards assigned to any preceding sub-actions comprised in the same multivariate action.
   8e. The computer-implemented method of clause 8d, wherein step i. comprises ordering the extracted sub-actions in dependence on a probability that each of the sub-actions is invalid.
   8f. The computer-implemented method of any of clauses 8 to 8e, wherein each sub-action has an associated sub-action action space, the method further comprising normalising each sub-action action space to the largest sub-action action space for the extracted sub-actions for the multivariate action.
   8g. The computer-implemented method of clause 8f, wherein the normalising comprises translating smaller sub-action action spaces to larger sub-action action spaces using bins with sizes determined in dependence on a prediction of sub-reward for each possible sub-action.
   8h. The computer-implemented method of either of clauses 8f or 8g, wherein the normalising comprises translating smaller sub-action action spaces to larger sub-action action spaces using bins with sizes which are adjusted as iteration through the series of actions progresses.
   8i. The computer system of clause 1 or the computer-implemented method of any of clauses 2 to 8h, wherein the simulated environment is a graph-based environment.
   8j. The computer system of clause 1 or the computer-implemented method of any of clauses 2 to 8i, wherein the RL agent is a cybersecurity agent.
   8k. The computer system of clause 1 or the computer-implemented method of any of clauses 2 to 8j, wherein the RL agent comprises a neural network.
9. A computer-implemented method of improving the security of a computer network, the method comprising:
   performing the method of any of clauses 2 to 8k, wherein the agent is a cybersecurity red agent;
   causing the cybersecurity red agent to launch one or more attacks on one or more computer network simulations;
   performing an analysis of those one or more attacks; and
   causing implementation of security measures in the computer network based on that analysis.
10. A computer-implemented method of improving the security of a computer network, the method comprising:
   performing the method of any of clauses 2 to 8k, wherein the agent is a cybersecurity blue agent; and
   causing the cybersecurity blue agent to defend the computer network.
11. A reinforcement learning agent trained according to the method of any of clauses 2 to 8k.
12. A data processing system configured to perform the method of any of clauses 2 to 10.
13. A computer program comprising instructions which, when the program is executed by a computer, cause the computer to carry out the method of any of clauses 2 to 10.
14. A computer-readable data carrier having stored thereon the computer program of clause 13.
15. A data carrier signal carrying the computer program of clause 13.

### BRIEF DESCRIPTION OF THE FIGURES

Aspects of the present disclosure will now be described by way of example with reference to the accompanying figures. In the figures:
Figure 1A is a flowchart of an example computer-implemented method of improving the security of a computer network;
Figure 1B is a flowchart of another example computer-implemented method of improving the security of a computer network;
Figure 2A is a flowchart of an example computer-implemented method of training an RL agent;
Figure 2B is a schematic diagram of an example RL agent training computer system;
Figure 3 is a flowchart of another example computer-implemented method of training an RL agent;
Figure 4 is a flowchart of yet another example computer-implemented method of training an RL agent; and
Figure 5 is a schematic diagram of an example data processing system.

### DETAILED DESCRIPTION

Instead of having a single RL agent explore and learn an entire large action space, a few smaller RL agents can be used to explore smaller action subspaces. The outputs of these smaller agents can then be chained together to produce the final action. However, such multi-agent approaches can be tricky to implement and resource-intensive.

An alternative, single agent, approach to RL is proposed herein, wherein multivariate actions are decomposed into multiple sub-actions which are performed in series before the environment is updated, such that the action space for each sub-action is compressed versus the overall action space. This single agent approach is easier to implement, less resource-intensive, and can be trained more efficiently than approaches using multiple sub-agents.

This approach can for example be used to train a cybersecurity red agent to attack a computer network simulation modelled as a topological graph. Nodes of the graph represent the various computer devices making up the network (e.g., endhost devices, servers, switches, routers, etc.). Links between nodes (edges) represent communication channels between the various devices. The red agent's goal can for example be to propagate malware throughout the entire network, or to infect one or more target devices. It typically starts from a single entry point (source node), with no knowledge of the remainder of the network. Through a training process it learns how to attack a network and identify attack paths from a given source device to one or more target devices.

An observation of the state of the environment can for example comprise:
1. a list of all the nodes in the network by their identifier (ID), along with their current state (0 = unknown to the agent; 1 = known to the agent but not compromised; 2 = known and compromised by the agent); and
2. a list of all the links in the network based on source and end node IDs, along with their current state (0 = unknown to the agent; 1 = known to the agent). The observation can be translated into a vector of values, for example comprising node data followed by link data, e.g. [0, 0, 1, 2, 2, 0, ... 0, 1, 0, 0, 2, 0, ... ].

The agent can for example employ three types of action:
1. network discovery (`0') - the agent attempts to discover neighbouring nodes linked to a node the agent already controls;
2. system discovery (`1') - the agent attempts to discover additional information about a particular node, e.g., its vulnerabilities;
3. infect/exploit (`2') - the agent attempts to infect a target node, starting from an already controlled node.

To execute each of these actions, a conventional red agent must also specify two additional node IDs. In the case of system discovery and infect actions, the first node ID specifies the already compromised node from which the action starts, and the second node ID specifies the target of the action (respectively the node to gather intelligence on, and the node to infect). In the case of network discovery, the first node ID indicates that the network discovery is carried out from that node, while the second node ID is meaningless (but required so that all actions are specified in the same format). The actions available to the agent can be represented by a triplet of values. The first value indicates the action type (either '0', '1' or '2') while the remaining values indicate the first and second node IDs, which can range from 0 to n-1, where n is the number of nodes in the network. For example, [2, 15, 8] specifies infection of node 8 from node 15.

The action space is large for large networks; 3n² for a network of n nodes. In addition, many of the actions available for the agent to try are invalid, especially early in the process when very few nodes have been infected so most first node ID choices result in invalid actions. Since the agent samples actions at random it can take a long time for it to hit on enough positively rewarded actions to learn what makes an action desirable.

In addition, using a conventional single RL agent approach it is impossible to assign different rewards to different components of the action. Taking the above action as an example, it may be desirable to positively reward the selection of node 8 as the target of an infection if it is a valuable target to acquire. However, this information cannot be communicated to the agent if source node 15 is not currently compromised, and therefore the action is invalid so must be given a negative reward on that basis.

Both of the above problems can be solved by having the agent specify components of the action individually, rather than all at once. This can be achieved by creating a number of sub-actions. For example, the action [2, 15, 8] can be split up and rewarded as indicated in Table 1.

**Table 1**

| | | | |
|---|---|---|---|
| Action index | 0 | | |
| Sub-action index | 0 | 1 | 2 |
| Sub-action | [27] | [15] | [8] |
| Sub-reward | +5 | -5 | +10 |

The sub-action indices can be provided to the agent so that the agent can learn the best values for each sub-action type in the sequence. This can for example be done by augmenting the observation of the environment provided to the agent with the current sub-action index. In this case the sub-action types are 0: action type, 1: source node selection, 2: target node selection.

Notice how sub-action 0 in Table 1 is not `2' as previously, but rather a higher value. This is because neural network-based agents require fixed ranges of input and output values. Therefore, sub-action values are normalised to the largest sub-action action space, in this case the number of nodes in the network. For example, for a network of 30 nodes sub-action 0's possible values can be translated using bins as shown in Table 2, where a square bracket indicates the range boundary is on the adjacent number while a round bracket indicates the range boundary runs up to the adjacent number, but does not include it.

**Table 2**

| | | | |
|---|---|---|---|
| Action type | 0 | 1 | 2 |
| Sub-action | [0, 10) | [10, 20) | [20, 29] |

The bins do not necessarily have to be of equal sizes. Instead, larger bins could be allocated to more desirable action types to increase the probability of the agent performing those action types. The bin sizes could also be adjusted over the course of a training process. For example, early in the process network discovery (action type 0) is likely to be more fruitful than system discovery or infection, both of which require knowledge of multiple nodes to be valid, so action type 0 can be allocated a larger bin than action types 1 and 2. Later in the process, for example once a threshold number of nodes have been discovered or even when network discovery no longer yields new information (indicating the entire network has been mapped), system discovery will be more valuable so can be allocated a larger bin. Even later, for example once a threshold number of nodes have been characterised via system discovery actions, or once system discovery no longer yields new information (indicating all nodes in the network have been characterised), infection can be allocated a larger bin. The way in which the bin sizes are adjusted over the course of the training process can be predetermined, or can be determined by the agent, the training program, or an ancillary agent analysing how the training is progressing and adjusting the bin sizes accordingly.

An additional benefit of decomposing a multivariate action into sub-actions for the agent to step through before the action is executed on the environment arises when certain actions do not require all sub-action types. In the cybersecurity red agent example above, when enacting a network discovery action (`0'), the agent only needs to specify one node ID, the node the scanning of the network occurs from. As noted above, in the conventional definition of the action space, where the agent must specify a triplet of values, actions of network discovery must always include source and target nodes, even though the target node is completely ignored. This unnecessary region of the action space can be eliminated by dynamically changing the number of sub-actions for each action. For example, a sequence of two network discovery actions followed by an infect action could be decomposed as indicated in Table 3 below.

**Table 3**

| | | | | | | | |
|---|---|---|---|---|---|---|---|
| Action index | 0 | | 1 | | 2 | | |
| Sub-action index | 0 | 1 | 0 | 1 | 0 | 1 | 2 |
| Sub-action | [5] | [14] | [6] | [20] | [27] | [15] | [8] |
| Sub-reward | +5 | -5 | +5 | +5 | +5 | -5 | +10 |

The single agent action decomposition approach described above is not solely of use for cybersecurity red agent training. It can also for example be used for training agents for controlling robots to perform physical tasks, for example a lumberjack agent tasked with cutting down trees using an axe. Each action could comprise three variables: the position where the axe is held; the angle of the swing; and the force of the swing, each variable ranging from -45 to +45. An example action could be specified as [+20.3, +9.8, +4.5], indicating that the axe is held +20.3 units from the end of the handle, the axe is swung at an angle of +9.8 degrees, and that the swing is done with +4.5 units of force. The action space is large, with the majority of actions resulting in invalid or undesirable axe swings. The reward assigned to the action in conventional reinforcement learning could for example be +17, while the perfect score would be +20, but with the conventional single agent approach there is no way to indicate to the agent which component led to a sub-optimal reward. Instead, the action could be decomposed and rewarded as follows in Table 4, where the sub-action types are 0: holding position, 1: swing angle, 2: swing force.

**Table 4**

| | | | |
|---|---|---|---|
| Action index | 0 | | |
| Sub-action index | 0 | 1 | 2 |
| Sub-action | [+20.3] | [+9.8] | [+4.5] |
| Sub-reward | +10 | +9 | -2 |

The action space is significantly reduced with this approach, to one third its original size. This leads to a more efficient action space search. In addition, while the sub-rewards still total 17, the agent has learned that both the position at which the axe is held, as well as the angle of the swing are good, while the force component is not.

The reward scheme presented in Table 4 is well suited for scenarios where the sub-actions are independent from one another. For example, this scheme works well if there is a concrete range of desirable angles for the swing, regardless of what the other sub-actions are. On the other hand, if the selection of good values for each sub-action is dependent on other sub-actions, a more interlinked reward scheme could be preferable. In this alternate scheme, the reward given for each sub-action is dependent on the previous sub-actions. For example, perhaps a holding position of +20.3 is not particularly good for most swings, but works well if the angle of the swing is +9.8. In this case, we could specify that the initial sub-reward for the sub-action +20.3 is negative (e.g., -5) but when the following sub-action of +9.8 is executed, its reward is boosted to compensate for the previously negative reward given out (e.g., the agent could be rewarded with +25).

With a more incremental reward scheme such as this, the order in which the agent is asked to supply the sub-actions matters. Sub-actions which partition the reward space better can be supplied earlier. In this example, the position where the axe is held is the most significant aspect to achieving a good result. In a scenario where the most important criterion for a good action is the force of the swing (e.g., where swings done with a force lower than +4 are only successful when paired with a limited range of other sub-actions), defining the force sub-action earlier is preferable.

Another type of agent the above-described approach can be used to train is a cybersecurity blue agent. A blue agent typically starts training with full knowledge of a simulated network and a simulated attack on it (e.g., a probabilistically modelled threat). Its goal can for example be to minimise the number of infections in the network, maximise an overall network health score, or protect one or more critical assets. It can for example take actions such as running endpoint detection scans, patching devices, quarantining machines, updating software, blocking domains, blocking ports, and restricting software access. Those actions can for example be decomposed into action type and node selection sub-actions (e.g., 'action = patch node 5' can be decomposed into sub-action type = patch', target node = 5').

The single agent action decomposition approach described above is illustrated by the flowchart of Figure 2A, which shows a computer-implemented method 200A of training an RL agent to perform a task by enacting a series of actions on a simulated environment, the series of actions comprising at least one multivariate action defined by v variables (where 'multivariate' means that v is at least two). The method 200A comprises, for each multivariate action:
i. at step s220, extracting one or more sub-actions, each sub-action being defined by a number of the v variables (that number being an integer from 1 to v);
ii. at step s260, assigning a sub-reward to each sub-action; then
iii. at step s280, updating the environment.

Figure 2B schematically illustrates a corresponding computer system 200B for training an RL agent 203 (which for example comprises one or more neural networks) to perform a task by iteratively: ingesting an observation of a simulated environment 201, and enacting an action on the simulated environment 201 to form a series of actions, the series of actions comprising at least one multivariate action defined by v variables. The computer system 200B comprises: a decomposition engine 220 configured to, for each multivariate action, extract one or more sub-actions, each sub-action being defined by a number of the v variables; a reward engine 260 configured to assign a sub-reward to the RL agent 203 for each sub-action; and an environment interface 280 configured to enact the series of actions on the simulated environment 201.

In the examples described above, each sub-action is defined by one of the v variables defining the multivariate actions. However, in some examples one or more of the sub-actions can be defined by two or more (up to v- variables, i.e., one or more of the sub-actions can be multivariate. E.g., in the cybersecurity red agent example, the first sub-action could specify both the action type and source node, since no matter which action type is selected, the source node must be compromised for the action to be valid. As another example, when training an agent for controlling a robot to run by moving its arms and legs, movements of both legs could be paired in a single sub-action since there should be synchrony between those movements (one moves forwards while the other moves backwards).

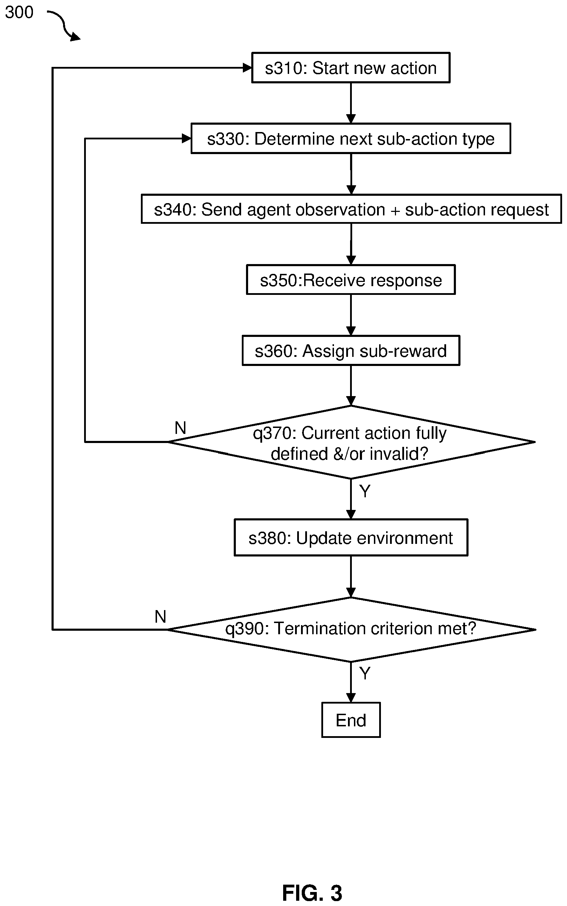

Figure 3 is a flowchart illustrating a training program's role in the single agent action decomposition approach described above. It shows a computer-implemented method 300 of training an RL agent to perform a task by enacting a series of actions on a simulated environment, each action being defined by a series of one or more sub-actions. A new action is started at step s310. At step s330, a next sub-action type in the series of sub-actions is determined. Next, at step s340 the RL agent is sent an observation of the simulated environment and a request to select a sub-action of the determined type. In response to receiving a response to the request from the RL agent at step s350, the training program assigns the RL agent a sub-reward determined in dependence on that response at step s360. At query q370 it is determined whether the current action is fully defined and/or invalid. If not, the flow returns to step s330 to iterate through the same process for the next sub-action type. If the current action is determined to be fully defined at query q370 then the flow proceeds to step s380 where the environment is updated. Then query q390 tests whether a termination criterion for the agent training has been met, starting another iteration of an outer loop from step s310 if not. Termination criteria can for example include the agent achieving its goal (e.g., a cybersecurity red agent infecting all nodes in a computer network, or infecting a particular target node, or a lumberjack robot cutting down all trees in a designated area), a predetermined maximum number of actions having completed, or a predetermined maximum time having elapsed.

Note that, if the current action is determined to be invalid at query q370, the process proceeds directly to the next action (if any), regardless of whether any further sub-actions must be specified to fully define the current action. This avoids wasting resources such as time, power, and memory on actions which will not garner positive rewards.

Determination of the next sub-action type at step s330 can be performed in dependence on the response(s) received from the agent in any preceding iterations of step s350 for the current action. In this way, the process can be dynamically adjusted to ensure all the sub-actions required to fully define each valid action are iterated, without iterating through any extraneous sub-actions.

The sub-actions can be indexed in a series for each action, and step s340 can further comprise sending the agent the next sub-action index in that series, for example by augmenting the observation provided to the agent, so that the agent can learn the best sub-actions for each sub-action type.

Step s360 can comprise determining the sub-reward in dependence on sub-rewards assigned to any preceding sub-actions comprised in the current action. In this way, compensation can be made when combinations of sub-actions produce unusually good or bad results (versus what would be expected if sub-actions were entirely independent of one another).

Where such a compensated reward scheme is used, step s330 can comprise selecting the next sub-action type as the one of the available sub-action types with the lowest associated probability that a sub-action of that type is invalid. In this way, the agent is more likely to still have the opportunity to learn how good the valid sub-actions are, even if the overall action is invalid, despite the curtailment of the inner process loop by query q370.

As explained above, if different sub-action types have different sized action spaces, then each sub-action action space can be normalised to the largest sub-action action space for the series of sub-actions. That can for example be achieved by translating smaller sub-action action spaces to larger sub-action action spaces using bins with sizes determined in dependence on a prediction of sub-reward for each possible sub-action.

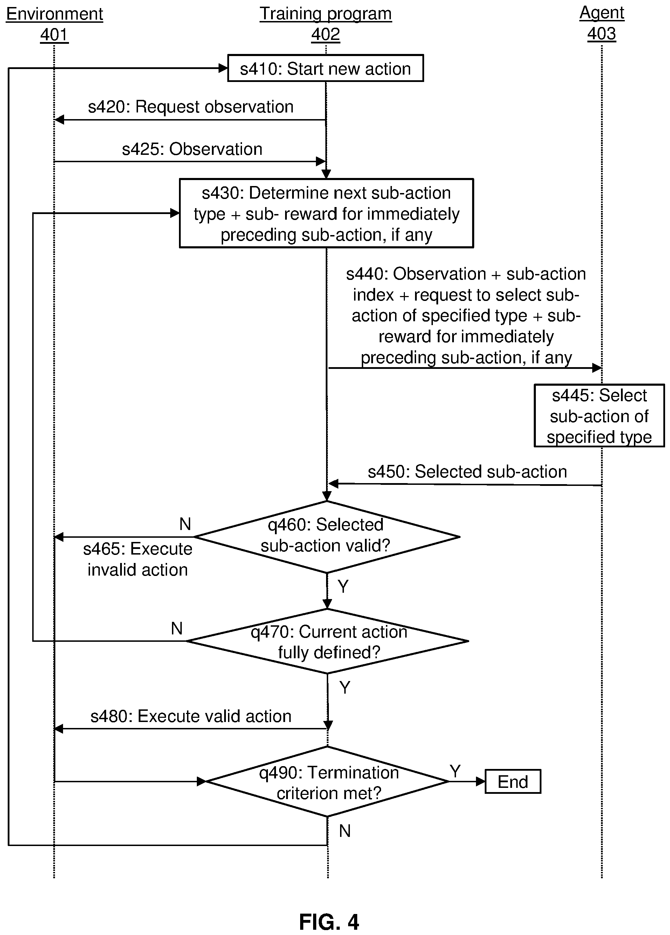

Figure 4 illustrates in some more detail an example of how a training program 402 can interact with a simulated environment 401 and an RL agent 403 to train the agent.

At step s410 the training program 402 starts a new action. It then proceeds to request an up-to-date observation from the environment 401 at step s420, which is provided to the training program 402 by the environment 401 at step s425. The training program 402 then determines the next sub-action type at step s430. At step s440 the training program 402 provides the observation to the agent 403 along with a request for it to select a sub-action of the determined type and the index of that sub-action type. At step s445 the agent selects a sub-action of the specified type then provides its selection to the training program 402 at step s450. At query q460 the training program 402 determines whether the selected sub-action is valid. If not, the training program executes the invalid action in the environment 401 at step s465. (Since the action is invalid, the environment's state does not change, but the environment still needs to be updated to ensure that any normally occurring processes still take place, for example, any background traffic sent over the simulated network.) If the selected sub-action is determined to be valid at query q460 then the training program 402 determines whether the current action has been fully defined at query q470.

If the determination of query q470 is negative, then the process loops back to step s430 to iterate through the next sub-action. On this second, and any subsequent iterations, step s430 further comprises the training program 402 assigning a sub-reward for the immediately preceding sub-action and step s440 comprises communicating that sub-reward to the agent 403.

Once the training program 402 determines that the current action is fully defined at query q470, that action is executed in the environment 401 at step s480.

Once an action has been executed in the environment 401 (whether at step s465 or step s480), the training program 402 tests for one or more termination criteria at query q490. The process ends if a termination criterion is met, or loops back to step s410 to iterate through a new action if not.

### Suitable data processing system

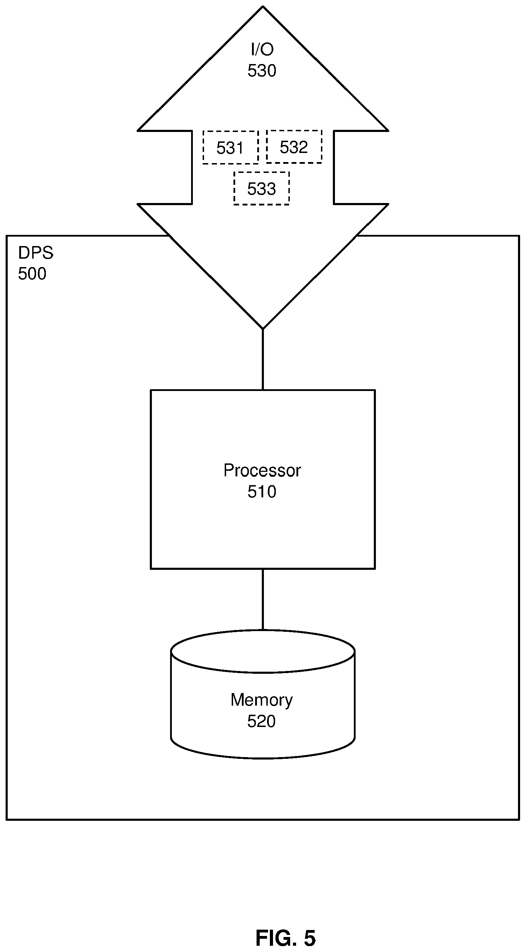

Figure 5 schematically illustrates an example data processing system (DPS) 500 capable of performing any of the methods described above. It comprises a processor 510 operably coupled to both a memory 520 and an interface (I/O) 530.

The memory 520 can optionally comprise computer program instructions which, when the program is executed by the processor 510, cause the data processing system 500 to carry out any of the methods described above. Alternatively or additionally, the interface 530 can optionally comprise one or both of a physical interface 531 configured to receive a data carrier having such instructions stored thereon and a receiver 532 configured to receive a data carrier signal carrying such instructions.

The receiver 532, when present, can be configured to receive messages. It can comprise one or more wireless receiver modules and/or one or more wired receiver modules. The interface 530 can optionally comprise a transmitter 533 configured to transmit messages. The transmitter 533, when present, can comprise one or more wireless transmitter modules and/or one or more wired transmitter modules.

The data processing system 500 can be a single computing device or multiple communicatively coupled computing devices. For example, the simulated environment 401, training program 402 and RL agent 403 of Figure 4 can all reside on separate computing devices, or two or all of them can reside on a single computing device. Similarly, the simulated environment 201, environment interface 280, RL agent 203, decomposition engine 220, and reward engine 260 of Figure 2B can all reside on separate computing devices, or two or more of them can reside on a single computing device.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims and clauses, features from dependent claims/clauses may be combined with those of the independent claims/clauses and features from respective independent claims/clauses may be combined in any appropriate manner and not merely in the specific combinations enumerated in the claims/clauses. Combinations may include features from both the claims and the clauses.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

## Claims

1. A computer system for training a reinforcement learning, `RL', agent to perform a task by iteratively: ingesting an observation of a simulated environment, and enacting an action on the simulated environment to form a series of actions, the series of actions comprising at least one multivariate action defined by v variables, the computer system comprising:
a decomposition engine configured to, for each multivariate action, extract one or more sub-actions, each sub-action being defined by a number of the v variables;
a reward engine configured to assign a sub-reward to the RL agent for each sub-action; and
an environment interface configured to enact the series of actions on the simulated environment.

2. A computer-implemented method of training a reinforcement learning, `RL', agent to perform a task by enacting a series of actions on a simulated environment, each action being defined by a series of one or more sub-actions, the method comprising a training program, for a current action in the series of actions:
a. determining a next sub-action type in the series of sub-actions;
b. sending the RL agent an observation of the simulated environment and a request to select a sub-action of that type;
c. receiving a response to the request from the RL agent;
d. assigning the RL agent a sub-reward determined in dependence on that response;
e. determining whether the current action is fully defined and/or invalid;
f. iterating steps a. to e. until an outcome of step e. is affirmative; then
g. updating the environment;
the method being performed iteratively for each action in the series of actions until a termination criterion is reached.

3. The computer-implemented method of claim 2, wherein step a. is performed in dependence on the response or responses received from the agent in any preceding iterations of step c. for the current action.

4. The computer-implemented method of either of claims 2 or 3, wherein the sub-actions are indexed in a series for each action, and step b. further comprises sending the agent the next sub-action index in that series.

5. The computer-implemented method of any of claims 2 to 4, wherein step d. comprises determining the sub-reward in dependence on sub-rewards assigned to any preceding sub-actions comprised in the current action.

6. The computer-implemented method of claim 5, wherein step a. comprises:
a-i. determining one or more available sub-action types, each with an associated probability that a sub-action of that type is invalid; and
a-ii. determining the next sub-action type as the one of the available sub-action types with the lowest associated probability that a sub-action of that type is invalid.

7. The computer-implemented method of any of claims 2 to 6, wherein:
each sub-action type has an associated sub-action action space, the method further comprising normalising each sub-action action space to the largest sub-action action space for the series of sub-actions.

8. A computer-implemented method of training a reinforcement learning, `RL', agent to perform a task by iteratively: ingesting an observation of a simulated environment, and enacting an action on the simulated environment to form a series of actions, the series of actions comprising at least one multivariate action defined by v variables" the method comprising, for each multivariate action:
i. extracting one or more sub-actions, each sub-action being defined by a number of the v variables; and
ii. assigning a sub-reward to each sub-action; then
iii. updating the environment.

9. A computer-implemented method of improving the security of a computer network, the method comprising:
performing the method of any of claims 2 to 8, wherein the agent is a cybersecurity red agent;
causing the cybersecurity red agent to launch one or more attacks on one or more computer network simulations;
performing an analysis of those one or more attacks; and
causing implementation of security measures in the computer network based on that analysis.

10. A computer-implemented method of improving the security of a computer network, the method comprising:
performing the method of any of claims 2 to 8, wherein the agent is a cybersecurity blue agent; and
causing the cybersecurity blue agent to defend the computer network.

11. A reinforcement learning agent trained according to the method of any of claims 2 to 8.

12. A data processing system configured to perform the method of any of claims 2 to 10.

13. A computer program comprising instructions which, when the program is executed by a computer, cause the computer to carry out the method of any of claims 2 to 10.

14. A computer-readable data carrier having stored thereon the computer program of claim 13.

15. A data carrier signal carrying the computer program of claim 13.
